# EUROPEAN PATENT APPLICATION

(11) **EP 1 385 111 A1**
(43) Date of publication of application: **28.01.2004**
(21) Application number: 03016985.8
(22) Date of filing: 25.07.2003
(51) Int. Cl.: G06F 17/60

(54) **A proxy fee settlement system**

(30) Priority: 26.07.2002 JP 2002218308
(71) Applicant: MATSUSHITA ELECTRIC INDUSTRIAL CO., LTD., Kadoma-shi, Osaka 571-8501 (JP)
(72) Inventor: Kimura, Kazunobu, Yokosuka-shi, Kanagawa 239-0843 (JP)
(74) Representative: Grünecker, Kinkeldey, Stockmair & Schwanhäusser Anwaltssozietät

(57) **Abstract**

Making a fee in a financial institution burdensome to a consumer returnable to a consumer by way of a partner providing an advertisement

Aproxy fee settlement system to solve the problem includes an advertisement distribution/proxy settlement contract management server for managing an advertisement distribution/proxy settlement contract signed by a financial institution and a partner, a net banking site/automatic teller machine management server for managing online services for the net banking site or automatic teller machine at the financial institution or service agent, a proxy settlement determination management server for determining a proxy settlement with a customer at the partner distributing an advertisement, and an account management server for charging a fee for a financial procedure to the partner's account.

## Description

### BACKGROUND OF THE INVENTION

### 1. Field of the Invention

The present invention relates to a proxy fee settlement system whereby a customer of a financial institution who happens to see an advertisement provided by a partner of the financial institution in a financial procedure commissions the partner to make proxy settlement of a fee for the financial procedure on the behalf of the customer.

### 2. Description of the Related Art

In recent years, diffusion of the internet technologies has led to explosion of the number of owners of PCs and portable information terminals. The internet traffic has been increasing in proportion to this trend. Under such circumstances, advertisement income models have been established whereby communications charges and connection charges borne by the user are reduced through banner advertisements in the online information delivery. Aso-called "fee-contingent on success type" advertisement distribution service which reflects the effect of sales on the advertisement charge and a system concerning the online shopping integrating an advertisement distribution service and sharing of profit with customers have been proposed. Models have been thus in general use which promote expansion of benefits for advertisement providers and site managers as well as internet users.

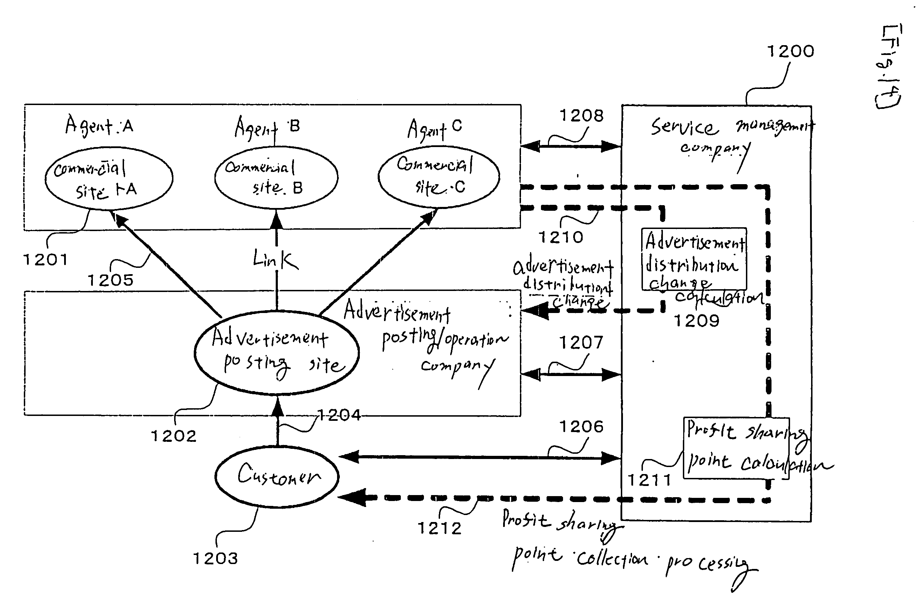

Fig. 14 is a schematic view of an online shopping system integrating an advertisement distribution service and sharing of profits with customers. The system comprises a service management company 1200, a commercial site 1201 operated by an online shopping agent, an advertisement posting site 1202 for posting an advertisement linked to the commercial site 1201, and a customer 1203 who use an online service. The service management company 1200 can exchange the information 1208 such as the contents of profit sharing service and the purchase record with the agent operating the commercial site 1201. The service management company 1200 can also exchange the access information 1207 of the customer 1203 with the advertisement posting company operating the advertisement posting site 1202. The customer who connects to the internet via his/her PC and makes an access to the system need to enter into a membership contract with the service management company 1200 in advance. In case the customer 1203 clicks on an advertisement posted on the advertisement posting site 1202 and purchases a commodity on the commercial site 1201 in the online shopping system, the service management company 1200 performs advertisement distribution charge calculation 1209 depending on the details of the purchase. The service management company 1200 then performs predetermined profit sharing point calculation 1211 for the customer who made the purchase, and performs an advertisement distribution charge transfer processing 1210 and a profit sharing point collection processing 1212.

Online services provided by financial institutions have been varied. The services by way of an automatic teller machine (hereinafter referred to as ATM) and a cash dispenser (hereinafter referred to as CD) are common. Mobile banking services which utilize portable terminals have started. The aforementioned online shopping and internet trading via financial institutions are on the increase. In general, services of financial institutions are available after predetermined credit authorization and account opening procedures.

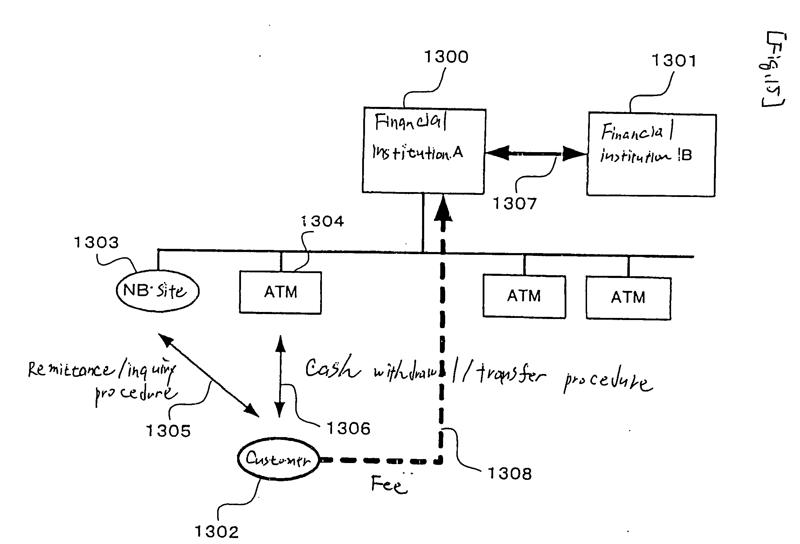

Fig. 15 is a schematic view of a related art financial procedure system modeling the procedures of a financial institution and a customer. In Fig. 15, a financial institution A 1300 is in a partnership with a financial institution B 1301. Mutual money transfer processing 1307 can be done online. The financial institution A 1300 has a net banking site 1301 and a plurality of ATMs in its service regions as an internet service and provides its customer 1302 with various services. For example, the customer 1302 can perform a remittance/inquiry procedure 1305 using a cell phone and a cash withdrawal/transfer procedure 1306.

A procedure by way of a financial institution is often accompanied by a fee. Even in case the user has his/her own account in the financial institution A 1300 as a customer 1302 of the financial institution A 1300, a service using the net banking site 1303 is often charged with a fee although it is based on a monthly paid small fee. Cash withdrawal using the ATM 1304 must bear the cots required for a processing beyond business hours as a fee. In the use of the ATM within business hours without a fee, a customer of a separate financial institution B1301 has to pay a fee caused through use of the ATM 1304 provided by the financial institution A 1300, which ATM is the only choice in the neighborhood.

A purchase of a commodity generally pays a transfer fee on the aforementioned online shopping also. Profit sharing points may be set equivalent to the fee, but the online shopping is not a major method in the purchasing activities and a system is not available whereby an amount equivalent to a fee is shared with customers.

### SUMMARY OF THE INVENTION

The invention aims at providing a system which returns a fee for a procedure at a financial institution which is a burden on a general consumer while taking advantage of the related art advertisement distribution service and profit sharing.

In order to attain the aforementioned object, a first aspect of the invention is a proxy fee settlement system, characterized in that the proxy fee settlement system comprises advertisement distribution/proxy settlement contract management means (an advertisement distribution/proxy settlement contract management server 106) for managing an advertisement distribution/proxy settlement contract signed by a financial institution or a service agent and a partner performing advertisement distribution at the financial institution or service agent, net banking site/automatic teller machine management means (a net banking site/automatic teller machine management server 105) for managing online services for the net banking site or automatic teller machine at the financial institution or service agent, proxy settlement determination management means (a proxy settlement determination management server 108) for determining a proxy settlement with a customer at the partner distributing an advertisement recognized by a customer in the online services, and account management means (an account management server 107) for charging a fee for a financial procedure followed by a customer using the online services through the net banking site/automatic teller machine management means to the partner' s account in accordance with the determination result of the proxy settlement. Thus the customer can commission a partner such as a store where he/she makes purchases to perform proxy settlement of a fee for a financial procedure. The partner can expect an increase in the sales profit via advertisement. The financial institution can receive the advertisement charge.

A second aspect of the invention is a proxy fee settlement system according to the first aspect, characterized in that the proxy settlement contract is executed when a customer, having confirmed that aproxy fee settlement service is available before the fee is charged, inputs financial procedure information on the net banking site or automatic teller machine. Thus, it is possible to follow a fee-free financial procedure based on a determination of a customer.

A third aspect of the invention is a proxy fee settlement system according to the first aspect, characterized in that the advertisement distribution contract signed by the financial institution or service agent and the partner is a contract per operation terminal such as an automatic teller machine in an advertisement distribution request area, a collective contract signed by a plurality of stores in a shopping district, and a local area contract tailored to the installation areas of operation terminals such as automatic teller machines. Thus, it is possible to set a fee tailored to a local area.

A fourth aspect of the invention is a proxy fee settlement system according to the first aspect, characterized in that the partner arbitrarily determines limiting conditions for proxy fee settlement under predetermined limitations specified by the financial institution and manages the limiting conditions on the advertisement distribution/proxy settlement contract management means in a proxy settlement contract signed by the financial institution or service agent, the partner and the customer. Thus, it is possible to invite the agent into advertisement, invigoration of a local area via promotion of partnerships, and implementation of a three-party profit circulation model.

A fifth aspect of the invention is a net banking site/automatic teller machine management server for managing online services for the net banking site or automatic teller machine at the financial institution or service agent, characterized in that the server comprises means for selecting methods for financial procedures, proxy settlement contract and proxy settlement status inquiry depending on the connection medium used by a customer such as a cash card, credit card, integrated circuit (IC) card and portable terminal.

A sixth aspect of the invention is an advertisement distribution/proxy settlement contract management server for managing an advertisement distribution/proxy settlement contract signed by a financial institution or a service agent and a partner performing advertisement distribution at the financial institution or service agent, characterized in that the server comprises distribution area selecting means for enabling advertisement distribution per operation terminal such as an automatic teller machine managed by the financial institution or service agent and advertisement distribution/proxy settlement contract means for changing the contract terms depending on the status of a contract with a partner under advertisement distribution and proxy fee settlement contracts with the financial institution or service agent.

A seventh aspect of the invention is an account management server for charging a fee for a financial procedure followed by a customer using online services for a net banking site or automatic teller machine to the partner's account, characterized in that the server comprises a proxy settlement status management database for inputting information about the financial procedure of a customer from net banking site/automatic teller machine management means for managing online services for the net banking site or automatic teller machine owned by the financial institution or service agent and advertisement distribution/proxy settlement contract management means for managing advertisement distribution/proxy settlement contract services as well as information about the presence/absence of proxy settlement of a fee charged to the customer from proxy settlement determination management means for managing determination on the proxy settlement of a fee, the proxy settle determination management means owned by a partner under advertisement distribution and proxy fee settlement contracts with the financial institution or service agent, and settlement account determination/selection means for switching between customer's accounts for fee settlement of the customer based on the input information.

An eighth aspect of the invention is a proxy settlement determination management server for determining a proxy settlement with a customer in a partner distributing an advertisement recognized by a customer in online services for the net banking site or automatic teller machine at a financial institution or service agent, characterized in that the server comprises proxy settlement determination means for determining that the customer is targeted for proxy fee settlement based on information about the financial procedure of the customer from the financial institution or service agent and information on the use of services by the customer such as purchase of commodities at the partner, and means for communicating the determination result to the financial institution or service agent.

### BRIEF DESCRIPTION OF THE DRAWINGS

Fig. 1 is a block diagram showing a proxy fee settlement system according to an embodiment of the invention;
Fig. 2 is a block diagram showing an advertisement distribution/proxy settlement contract management server;
Fig. 3 is an explanatory drawing to show a data example of an advertisement distribution/proxy settlement contract status database of the advertisement distribution/proxy settlement contract management server;
Fig. 4 is an explanatory drawing to show another data example of an advertisement distribution/proxy settlement contract status database of the advertisement distribution/proxy settlement contract management server;
Fig. 5 is a block diagram showing an NB/ATM management server;
Fig. 6 is a block diagram showing an operation terminal such as an ATM;
Fig. 7 is a flowchart showing an example of a proxy settlement request contract procedure to explain the NB/ATM management server;
Fig. 8 is a flowchart showing another example of the proxy settlement request contract procedure to explain the NB/ATM management server;
Fig. 9 is an explanatory drawing to show a data example of a proxy settlement status inquiry database of the NB/ATM management server;
Fig. 10 is a block diagram showing an account management server;
Fig. 11 is an explanatory drawing to show a data example of a proxy settlement status management database of the account management server;
Fig. 12 is a block diagram showing a proxy settlement determination management server;
Fig. 13 is an explanatory drawing to show proxy settlement inquiry data to explain the proxy settlement determination management server;
Fig. 14 is a block diagram showing a related art advertisement distribution/point return system;
Fig. 15 is a block diagram showing a related art financial procedure system.

### DESCRIPTIONS OF THE PREFERRED EMBODIMENTS

An embodiment of the invention will be detailed to the attached drawings.

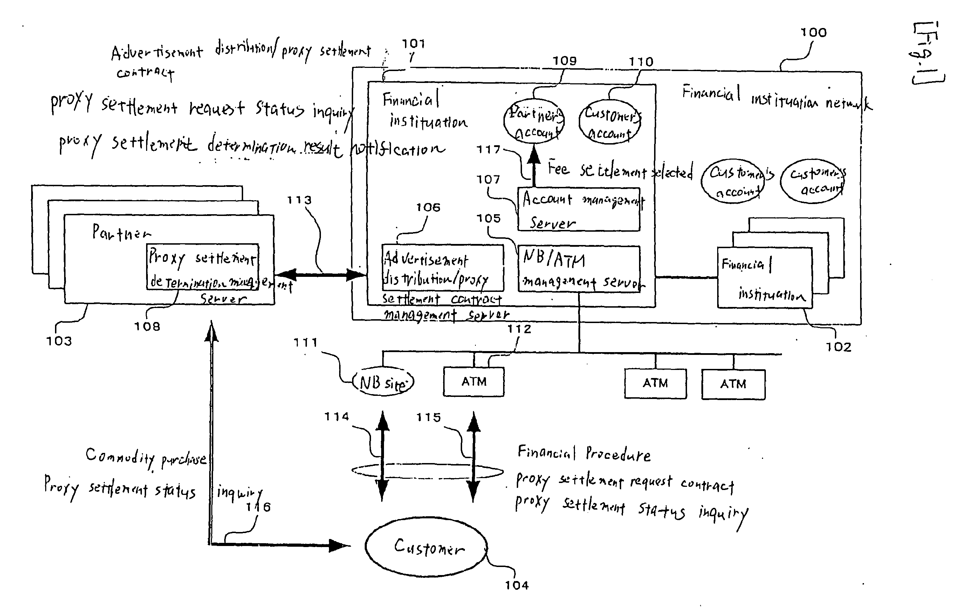

An exemplary procedure in a proxy fee settlement system according to this embodiment will be described referring to Fig. 1. In Fig. 1, a financial institution 101 is connected online with another financial institution 102 and forms a financial institution network 100. The financial institution 101 is also connected via a network with a partner 103 executing advertisement distribution and proxy settlement contracts. The financial institution 101 is connected online with a net banking (hereinafter referred to as NB) site 111 and an ATM 112. The financial institution 101 comprises an advertisement distribution/proxy settlement contract management server 106 for managing proxy settlement contract, an NB/ATM management server 105 for managing an NB site 111 or an ATM 112, and an account management server 107 for selecting a partner' s account 109 or a customer's account 110 as a settlement account depending on the proxy settlement determination result.

The partner 103 can execute an advertisement distribution contract and a proxy settlement contract with the financial institution 101 via a network and also make a procedure 113 such as a status inquiry about the proxy settlement request of the customer 104. The partner 103 comprises a proxy settlement determination management server 108 for determining whether proxy settlement is applicable as well as the service use status of the customer 104 such as purchase of commodities.

The procedure for proxy settlement will be described sequentially assuming that the customer 104 performs financial procedures 114, 115 with the NB/ATM management server 105 of the financial institution 101 via the NB site 111 or ATM 112.

The partner 103 enters into an advertisement distribution/proxy settlement contract with the financial institution 101. This contract may be a contract per operation unit such as an ATM, a contract per area, or a collective contract signed by a plurality of stores in a shopping district. Thus a local area contract tailored to the installation areas of operation terminals such as automatic teller machines is possible. In case a convenience store installs an ATM terminal in the store, a contract with the terminal only may be possible . Discount of fee and advertisement distribution change through multiple contracts is available. The partner 103 pays an advertisement distribution charge to the financial institution 101 and must pay a fee on behalf of the client 104 only in case there is an obligation to settle the fee as a proxy. The obligation to settle the fee as a proxy can be arbitrarily set by the partner 103 under predetermined conditions specified by the financial institution 101. For example, the financial institution 101 may present a condition of batch payment of the fees for the financial procedures of the customer 104 at the end of each month and the partner 103 may accept a proxy settlement for the fees only in case the customer has used the services equivalent to 20 times as high as the fees.

The customer 104 then uses the NB site 111 or the ATM 112 to follow a financial procedure. In case the procedure is accompanied by a fee, the customer 104 can enter into a proxy fee settlement request contract with the partner 103 that the partner takes over the fee under certain conditions instead of watching the distributed advertisements of the partner 103. The customer 104 can check whether a proxy fee settlement service is available to a desired partner of financial institution be fore starting a financial procedure. That is, the customer 104 can determine whether to request proxy fee settlement before the fee is charged.

Under the aforementioned conditions, in case the customer 104 who is charge a fee of 105 yen in the financial procedure executes a proxy settlement request contract to the partner 103, the partner 103 has an obligation to settle the fee as a proxy when the customer 104 uses services equivalent to 2100 yen at the partner 103 within the month. Then the account management server 107 of the financial institution 101 charges a fee of 105 yen to the partner' s account 109, not to the customer' s account 110.

Until completion of the fee settlement, the proxy settlement determination management server 108 of the partner 103 determines about the presence/absence of the proxy fee settlement from the advertisement distribution/proxy settlement management information and customer's account management information from the financial institution 101 and the status of the customer 104 using the services from the partner, and communicates the presence/absence of the proxy fee settlement to the financial institution 101. The customer 104 can check the status about the presence/absence of the proxy settlement in a status inquiry 114, 115 via the NB site 111 or ATM 112, or status inquiry 116 via the partner 103.

In this procedure, the customer can commission the stores where he/she makes purchases to perform proxy settlement of a fee for a financial procedure and implement a system which expands the profit of each of the financial institution, partner and customer. The financial institution may leave the management service about the advertisement distribution and proxy fee settlement to an agent or execute advertisement distribution and proxy fee settlement services itself, same as the partner.

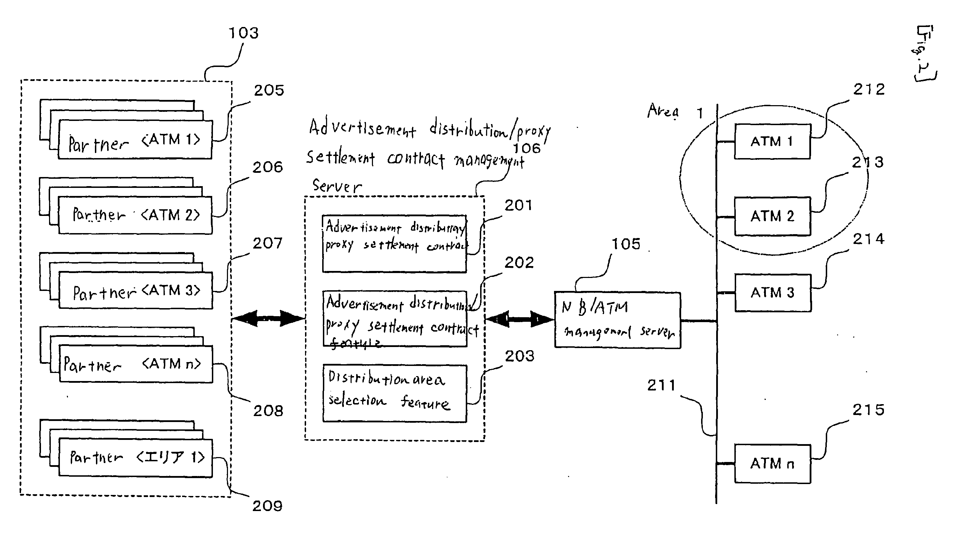

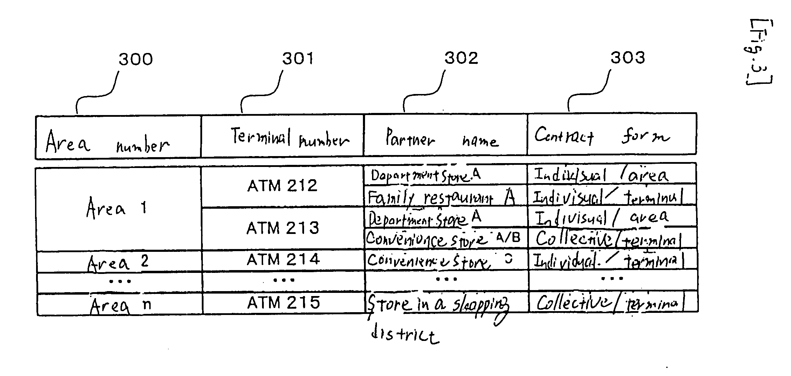

Next, an example of an advertisement distribution/proxy settlement contract management server 106 in a proxy fee settlement system according to this embodiment will be described referring to Figs. 2 and 3. In Fig. 2, the advertisement distribution/proxy settlement contract management server 106 comprises an advertisement distribution/proxy settlement contract status database 201, an advertisement distribution/proxy settlement contract feature 202 and a distribution area selection feature 203. The advertisement distribution/proxy settlement contract management server 106 is connected with the NB/ATM management server 105 in the financial institution, beyond which are connected ATMs 212 through 215 via a network 211. An advertisement distribution/proxy settlement contract management server 200 is connected to the partner 103 via a network. A contract in the advertisement distribution area brings a partner 205 under contract corresponding to the ATM 212, a partner 206 under contract corresponding to the ATM 213, a partner 207 under contract corresponding to the ATM 214, and a partner 208 under contract corresponding to the ATM 215, and a partner 209 under contract corresponding to the area, that is, the ATM 212 and ATM 213.

The partner 204 can enter into a desired contract while referring to the advertisement distribution/proxy settlement contract status database 201 by using the advertisement distribution/proxy settlement contract feature 202 and execute advertisement distribution/proxy fee settlement in a desired distribution area by way of the distribution area selection feature 203 in accordance with the contract.

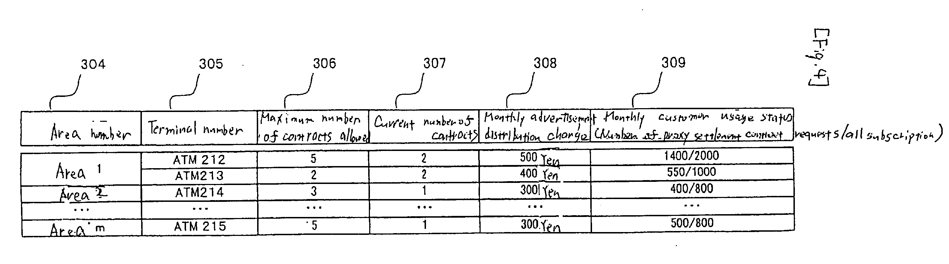

Figs. 3 and 4 show an example of the advertisement distribution/proxy settlement contract status database 201. Fig. 3 shows a database for referencing the partners and contract forms and comprises an area number 300, a terminal number 301, a partner name 302 and a contract form 303. The contract form 303 may be an individual/collective contract or an ATM terminal/area contract. For example, a collective contract involving the stores in a shopping district corresponding to the ATM 215 is advantageous in that the amount borne by each store is dramatically reduced.

Fig. 4 shows a database for referencing the current contract charge and customer usage status and comprises an area number 304, a terminal number 305, a maximum number of contracts allowed 306, a current number of contracts 307, a monthly advertisement distribution charge 308, and a monthly customer usage status 309. For example, the contract on the ATM 212 sets a higher advertisement distribution charge since a large number of customers are under contract.

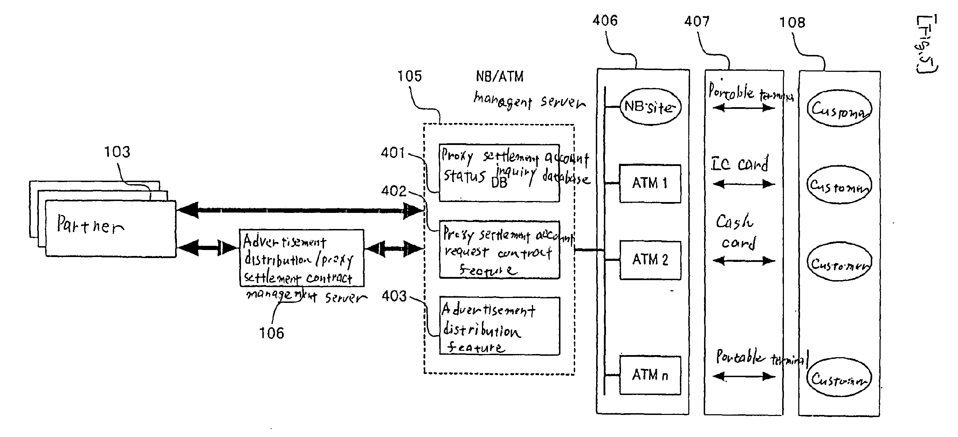

An example of the NB/ATM management server 105 in a proxy fee settlement system according to this embodiment will be described referring to Figs. 5, 6, 7 and 8. In Fig. 5, the NB/ATM management server 105 comprises a proxy settlement status inquiry database 401, a proxy settlement request contract feature 402 and an advertisement distribution feature 403 and is connected to the advertisement distribution/proxy settlement contract management server 106 in the financial institution and the partner 103 via a network. A numeral 406 represents a terminal such as an NB site/ATM terminal which can provide a customer 108 with various services via a connection medium 407. The advertisement distribution feature 403 distributes advertisements to areas indicated by the advertisement distribution/proxy settlement contract management server 106. The proxy settlement request contract feature 402 can determine and select the contract method and the inquiry method in accordance with the connection medium 407 in response to a proxy settlement contract request or proxy settlement status inquiry request from the customer 108. In the case of a contract request, the proxy settlement request contract feature 402 can store the contract result into the proxy settlement status inquiry database 401. In the case of a status inquiry request, the proxy settlement request contract feature 402 can read reference data from the proxy settlement status inquiry database 401.

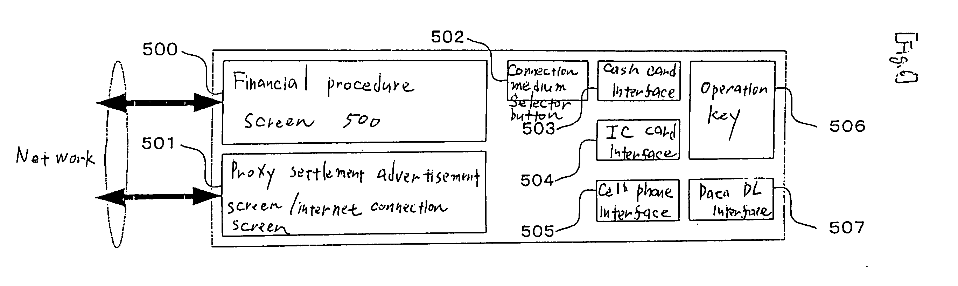

Fig. 6 shows an exemplary configuration of an operation terminal such as an ATM for implementing the proxy settlement request contract feature 402 in accordance with the connection medium 407 in Fig. 5. The terminal such as an ATM comprises a financial procedure screen 500 and a proxy settlement advertisement screen/internet connection screen 501, an IC card interface 504, a cell phone interface 505 and a connection medium selector button 502 for selecting these connection media, as well as a cash car interface 503 and an operation key 506 as in the related art. The terminal such as an ATM comprises an interface 507 for procedures using a portable terminal via a universal serial bus (USB) and Bluetooth protocol, or data download. For example, in case the customer has selected a portable terminal by using the connection medium selector button 502, he/she can select screen display, printing, and/or data download as a contract method or a proxy settlement inquiry method by way of the proxy settlement request contract feature 402.

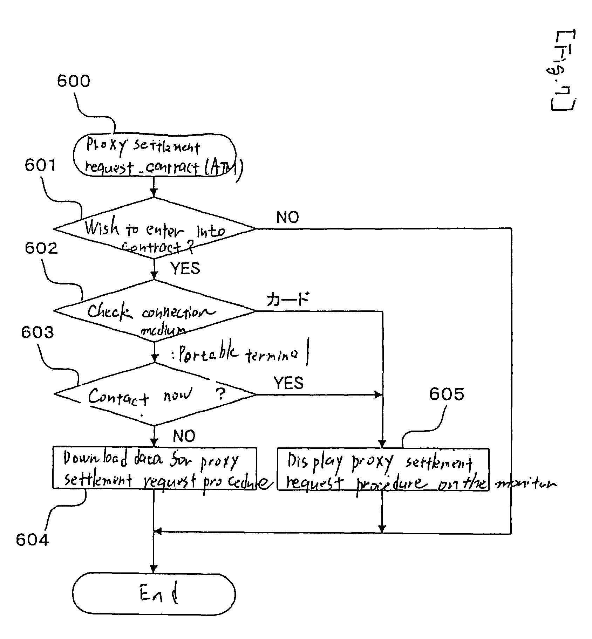

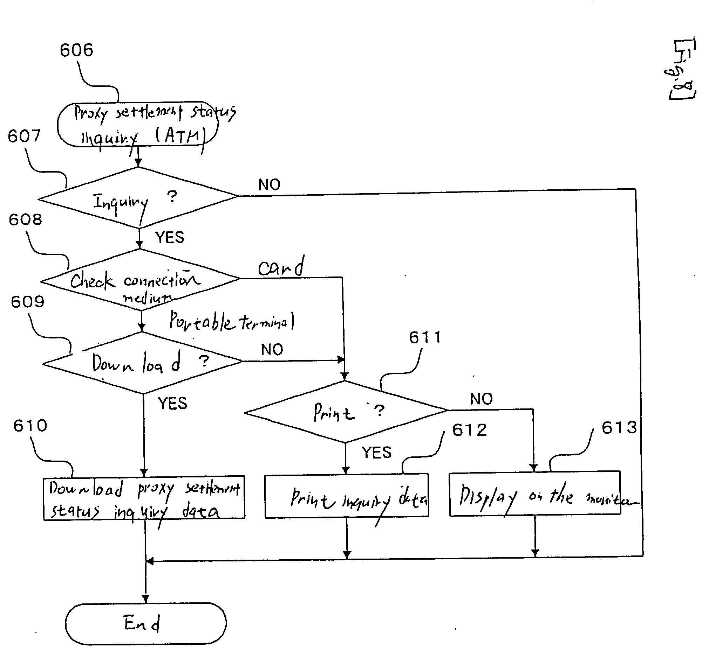

Figs. 7 and 8 are flowcharts showing an example of a proxy settlement request contract and a proxy settlement status inquiry. Fig. 7 shows a procedure of a proxy settlement request contract 600. An inquiry is made on a procedure screen 500 about whether the customer uses proxy settlement (step S601), then a connection medium 407 used is checked (step S602) . In case the connection medium is a portable terminal, an inquiry is made about whether the customer wishes to enter into the contract on the ATM screen (step S603). In the case of an ex post facto contract, execution performs data download for a proxy settlement request procedure (step S604) . In case the customer wishes to enter the contract o the spot while the connectionmedium 407 is a card or a portable terminal, execution displays the proxy settlement request procedure on the monitor (step S605) and prompts a contract. In the case of an ex post facto contract, execution may upload to the NB site the contract procedure carried out using data downloaded to the ATM to complete the procedure.

Fig. 8 is a procedure for proxy settlement status inquiry 606. An inquiry is made about whether the customer wishes to make a status inquiry (step S607) ; in case the customer wishes to make a status inquiry, a connection medium used is checked (step S608) . Only in case the connection medium is a portable terminal, an inquiry is made about whether the customer wishes to download the data (step S609). In case the customer wishes to download the data, execution downloads the proxy settlement status inquiry data (step S610). In case customer does not wish to download the data or the connection medium is a card, execution asks whether the customer wishes to print the data (step S611). In case the customer wishes to print the data, execution prints the status inquiry data. Otherwise execution displays the data on the monitor (step S613).

In this way, it is possible to provide services in accordance with the connection medium of the customer. In particular, by using a portable terminal in widespread use, the average operation time on an ATM terminal is reduced thus upgrading the processing efficiency.

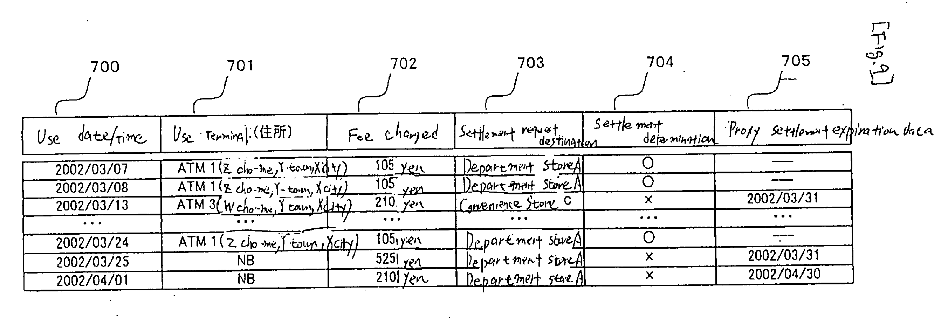

Fig. 9 shows an example of data acquired by a customer in a proxy settlement status inquiry. The proxy settlement status inquiry data, stored in the proxy settlement status inquiry database 401, comprises a use date/time 700, a use terminal 701, a fee charged 702, a settlement request destination 703, settlement determination 704, and a proxy settlement expiration date 705. In this example, proxy settlement is closed at the end of a month so that the customer knows the determination on the settlement at the time of inquiry. For example, a fee of 210 yen charged on the 13th of March is not under settlement. The proxy settlement status inquiry data is updated each time a fee for a financial procedure is charged.

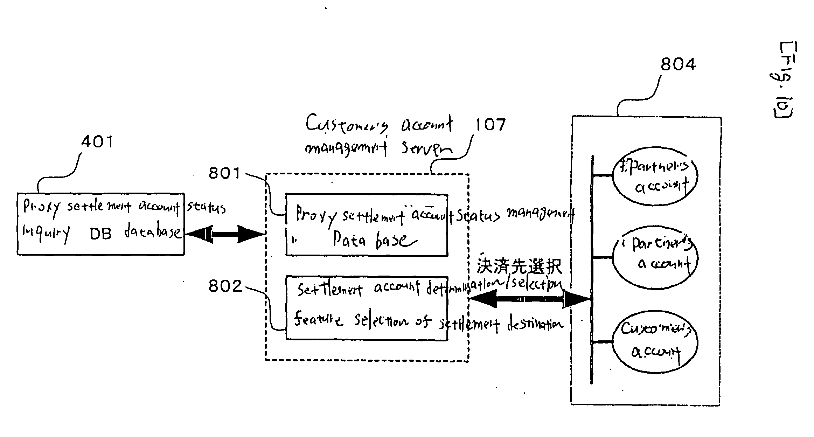

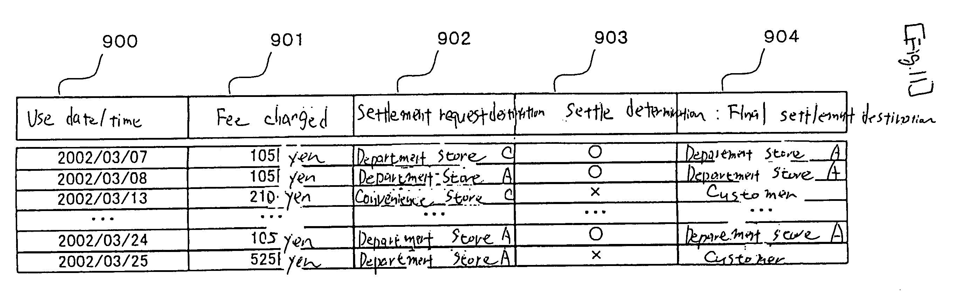

Next, an example of the account management server 107 in the proxy fee settlement system will be described referring to Figs. 10 and 11. In Fig. 10, the account management server 107 comprises a proxy settlement status management database 801 and a settlement account determination/selection feature 802. The account management server 107 is connected with the proxy settlement status inquiry database 401 and connected online with the partner' s account or customer' s account managed by the financial institution 101. The proxy settlement status management database 801 is updated referencing the proxy settlement status inquiry database 401 on demand.. For example, in case the settlement determination is made at the end of a month, the proxy settlement status inquiry database 801 is referenced at the end of a month to determine the final settlement destination and determine the settlement account.

Fig. 11 shows an example of data acquired from the proxy settlement status inquiry database 801. The proxy settlement status management data comprises a use date/time 900, a fee charged 901, a settlement request destination 902, settlement determination 903, and a final settlement destination 904. The customer's account or partner's account is assigned as a settlement account depending on the settlement determination result. A fee of 210 yen charged on the 13th of March is not under settlement since the customer did not use a predetermined service in the convenience store C as a settlement request destination before the proxy settlement expiration date. The fee is thus charged to the customer's account. In this way, the account management server 107 can switch the settlement account on demand depending on the settlement determination result.

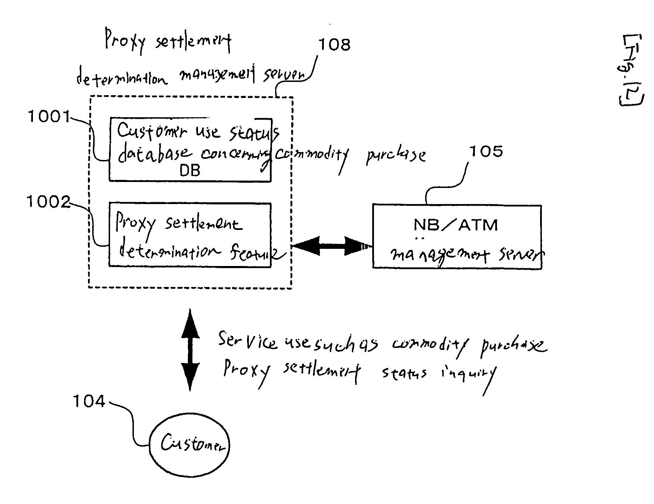

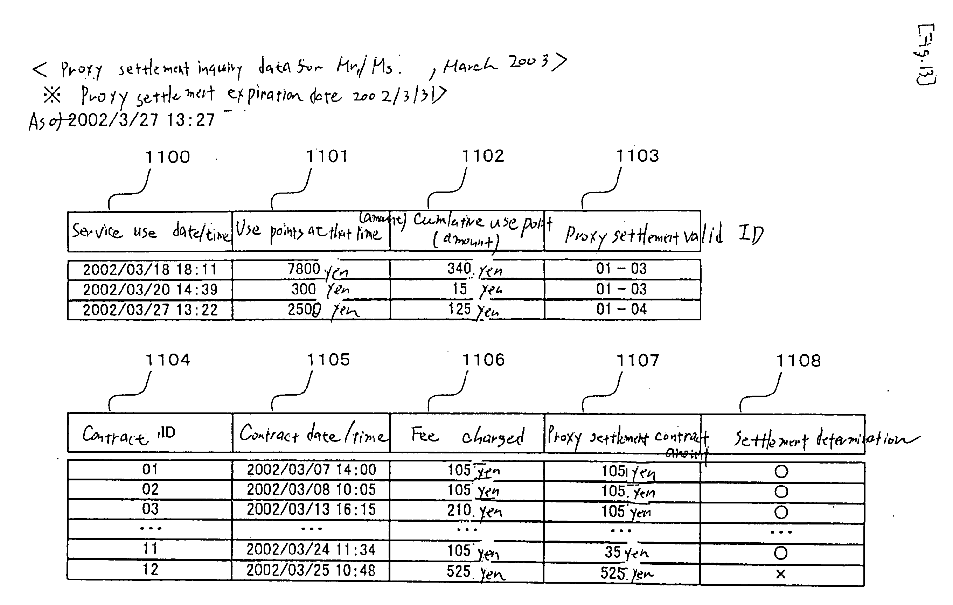

Finally, an example of the proxy settlement determination management server 108 in the proxy fee settlement system will be described referring to Figs. 12 and 13. In Fig. 12, the account management server 108, owned by the partner 103, comprises a customer use status database 1001 concerning commodity purchase and a proxy settlement determination feature 1002. The proxy settlement determination management server 108 is connected to the NB/ATM management server 105 in the financial institution. The proxy settlement determination management server 108 makes proxy settlement determination from the data about the customer 104 and service use data of the customer 104 managed by the partner 103 acquired from the proxy settlement status inquiry database 401 and communicates the determination result to the financial institution 101. The customer 104 can make an inquiry of the service use status such as commodity purchase and proxy settlement status to the partner 103.

Fig. 13 shows an example of data about which the customer can inquire of the partner 103 and actually the proxy settlement inquiry data for March, 2002. The proxy settlement expiration date is the end of March, and the inquiry date/time is March 27 in this example. The data comprises a service use date/time 1100, use points at that time 1001, cumulative use points 1102, and a proxy settlement valid ID 1103. As a proxy settlement ID list, it is possible to reference the data comprising a contract ID 1104, a contract date/time 1105, a fee charged 1106, a proxy settlement contract amount 1107, and settlement determination 1108.

In this example, five percent of the total use point is cumulatively returned to the customer. In the 12 financial procedures made in March, 11 procedures are under proxy settlement. The amount under proxy settlement may be shared by plural agents. For example, the fee for the contract ID03 is 210 yen but the partner bears only half of the amount or 105 yen. As amatterof fact, in case the customer uses additional services at the agent by the 31st of March, the fee for the contract ID 12 may be also under proxy settlement.

As understood from the foregoing description, according to the proxy fee settlement system of the invention, a customer of a financial institution can commission a partner under advertisement distribution contract with the financial institution to make proxy settlement of a fee for a financial procedure. It is possible to develop services tailored to a local area by providing a variety of combinations of contracts per operation terminal such as an ATM and collective contracts as forms of advertisement distribution/proxy settlement contracts. Further, by providing limiting conditions arbitrarily set by a partner in the proxy settlement of a fee which is relatively burdensome for an advertisement distribution service, it is possible to invite the agent into advertisement and promote partnerships thereby invigorating the local area, and implementation of a three-party profit circulation model.

## Claims

1. A proxy fee settlement system **characterized in that** said proxy fee settlement system comprises
advertisement distribution/proxy settlement contract management means for managing an advertisement distribution/proxy settlement contract signed by a financial institution or a service agent and a partner performing advertisement distribution at said financial institution or service agent,
net banking site/automatic teller machine management means for managing online services for the net banking site or automatic teller machine at said financial institution or service agent,
proxy settlement determination management means for determining a proxy settlement with a customer at said partner distributing an advertisement recognized by a customer in said online services, and
account management means for charging a fee for a financial procedure followed by a customer using said online services through the net banking site/automatic teller machine management means to the partner's account in accordance with the determination result of said proxy settlement.

2. A proxy fee settlement system according to claim 1, **characterized in that** saidproxy settlement contract is executed when a customer, having confirmed that a proxy fee settlement service is available before said fee is charged, inputs financial procedure information on said net banking site or automatic teller machine.

3. A proxy fee settlement system according to claim 1, **characterized in that** said advertisement distribution contract signed by said financial institution or service agent and said partner is a contract per operation terminal such as an automatic teller machine in an advertisement distribution request area, a collective contract signed by a plurality of stores in a shopping district, and a local area contract tailored to the installation areas of operation terminals such as automatic . teller machines.

4. A proxy fee settlement system according to claim 1, **characterized in that** said partner arbitrarily determines limiting conditions for proxy fee settlement under predetermined limitations specified by said financial institution and manages the limiting conditions on said advertisement distribution/proxy settlement contract management means in a proxy settlement contract signed by said financial institution or service agent, said partner and said customer.

5. A net banking site/automatic teller machine management server for managing online services for the net banking site or automatic teller machine at said financial institution or service agent,
**characterized in that** said server comprises means for selecting methods for financial procedures, proxy settlement contract and proxy settlement status inquiry depending on the connection medium used by a customer such as a cash card, credit card, integrated circuit card and portable terminal.

6. An advertisement distribution/proxy settlement contract management server for managing an advertisement distribution/proxy settlement contract signed by a financial institution or a service agent and a partner performing advertisement distribution at said financial institution or service agent,
**characterized in that** said server comprises distribution area selecting means for enabling advertisement distribution per operation terminal such as an automatic teller machine managed by said financial institution or service agent and
advertisement distribution/proxy settlement contract means for changing the contract terms depending on the status of a contract with a partner under advertisement distribution and proxy fee settlement contracts with said financial institution or service agent.

7. An account management server for charging a fee for a financial procedure followed by a customer using online services for a net banking site or automatic teller machine to the partner's account,
**characterized in that** said server comprises a proxy settlement status management database for inputting information about the financial procedure of a customer from net banking site/automatic teller machine management means for managing online services for the net banking site or automatic teller machine owned by said financial institution or service agent and advertisement distribution/proxy settlement contract management means for managing advertisement distribution/proxy settlement contract services as well as information about the presence/absence of proxy settlement of a fee charged to said customer from proxy settlement determination management means for managing determination on the proxy settlement of a fee, said proxy settlement determination managemnt means owned by a partner under advertisement distribution and proxy fee settlement contracts with said financial institution or service agent, and
settlement account determination/selection means for switching between customer's accounts for fee settlement of said customer based on the input information.

8. A proxy settlement determination management server for determining a proxy settlement with a customer in a partner distributing an advertisement recognized by a customer in online services for the net banking site or automatic teller machine at a financial institution or service agent,
**characterized in that** said server comprises proxy settlement determination means for determining that said customer is targeted for proxy fee settlement based on information about the financial procedure of said customer from said financial institution or service agent and information on the use of services by the customer such as purchase of commodities at said partner, and
means for communicating the determination result to said financial institution or service agent.
